# EUROPEAN PATENT SPECIFICATION

(11) **EP 2 014 425 B1**
(45) Date of publication and mention of the grant of the patent: **20.02.2013**
(21) Application number: 07112444.0
(22) Date of filing: 13.07.2007
(51) Int. Cl.: B25J 9/16

(54) **Method and device for controlling a robot**
Verfahren und Vorrichtung zur Steuerung eines Roboters
Procédé et dispositif de commande d'un robot

(43) Date of publication of application: 14.01.2009
(73) Proprietor: Honda Research Institute Europe GmbH, 63073 Offenbach/Main (DE)
(72) Inventor: Goerick, Christian, 63500 Seligenstadt (DE); Bolder, Bram, 63225 Langen (DE); Janssen, Herbert, 63303 Dreieich (DE); Kirstein, Stephan, 63165 Mühlheim (DE); Wersing, Heiko, 60318 Frankfurt (DE); Gienger, Michael, 60599 Frankfurt (DE); Sugiura, Hisashi, 60488 Frankfurt (DE); Mikhailova, Inna, 64293 Darmstadt (DE); Rodemann, Tobias, 63065 Offenbach (DE)
(74) Representative: Rupp, Christian

(56) References cited:
- WO-A-2007/076119
- US-A1- 2004 036 437
- BROOKS R.R.: "A Robust Layered Control System for a Mobile Robot" IEEE JOURNAL OF ROBIOTICS AND AUTOMATION, ISSN 0882-0967, vol. RA-2, no. 1, March 1986 (1986-03), pages 14-23, XP002466966

## Description

The present invention relates to a method and a device for controlling a robot. In particular, the invention proposes a novel architecture for such a device and a method for operating at the same.

### TECHNICAL BACKGROUND AND PRIOR ART

A long-standing goal of robot designers has been to make a robot act or behave "autonomously" and "intelligently" based on its sensory inputs, analogous to human behavior. One approach for building control systems for such robots is to provide a series of functional units such as perception, modelling, planning, task execution and motor control that map sensory inputs to actuator commands.

An alternative approach for designing a robot controller has been proposed in an article by Brooks ("A robust layered control system for a mobile robot", IEEE Journal of Robotics and Automation, 1986, RA-2(1):14-23). Here, so-called task achieving behaviors are used as the primary decomposition of the system. Layers or units of control are built to let the robot operate at increasing levels of competence, made up of asynchronous modules which communicate over low bandwidth channels. Each module is an instance of a simple computational machine. Higher-level layers or units can subsume the roles of lower levels by suppressing the outputs. Lower levels or units continue to function as higher levels are added. In other words, input to modules can be suppressed and outputs can be inhibited by wires terminating from other modules.
This is the mechanism by which higher-level layers subsume the role of lower levels. Apart from this rudimentary interaction, all layers or units of control are completely separated from each other. In particular, one layer or unit of control may strictly not observe the internal states of other layers/units, i.e. all layers follow separate concerns or tasks.

However, the latter feature implies that given to partially overlapping tasks, i.e. having a common sub task, this sub task may not be shared but must be duplicated, leading to an increased use of resources.

It is therefore an object of the present invention, to propose an improved method and device for controlling a robot, in particular one that enables sharing of resources among different layers/units.

This object is achieved according to the invention by a method and a device according to the independent claims. Advantageous embodiments are defined in the dependent claims.

Using a robot controller according to the invention also allows adding new functionality to the robot in an incremental fashion. This means that, although the level of performance may vary from version to version, the system is able to act at all times.

In particular, the inventive system is compositional in the sense that it comprises parts that may be combined to yield a new quality in behavior'. In other words, the system according to the invention is useful with respect to providing a systems decomposition, such that an incremental and learning system may be build, the system is always able to act, even if the level of performance may vary, and lower level units n provide representations and decompositions that are suited to show a certain behavior at level n and are further suited to serve as helping decompositions for higher levels, i.e. to make a given situation treatable in providing an "internal platform" that higher levels may learn to use.

### SHORT DESCRIPTION OF THE FIGURES

These and other aspects and advantages of the present invention will become more evident when reading the following detailed description of a preferred embodiment of the invention, in connection with the drawing in which
- Figure 1: shows a schematic block diagram of a robot controller according to an embodiment of the invention;
- Figure 2: shows a schematic block diagram of a robot controller according to a second embodiment of the invention.

### DETAILED DESCRIPTION

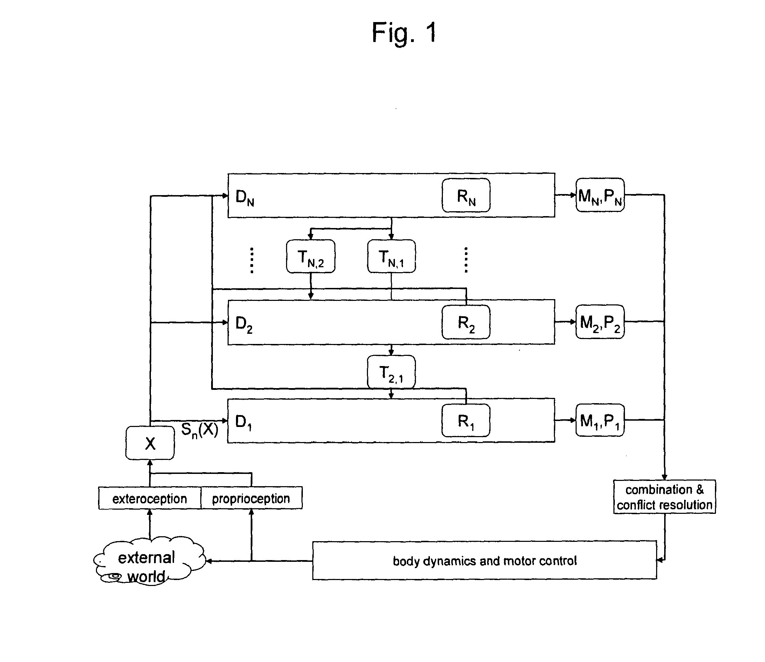

**Figure 1** shows a schematic block diagram of a robot controller according to a first embodiment of the invention.

In general, the generation of autonomous behavior for a humanoid robot according to the invention comprises receiving sensory inputs and processing them into internal representations that directly serve to generate specific behaviors. The processing of sensory information and the generation of behaviors may be organized into units. The representations stored in one unit may be provided to other units within the system in order to contribute to their operation/generation of behavior. The units may be arranged into an architecture that generates an overall behavior of the system by controlling the access to actuators. Additionally to reading the provided representations, units may send top-down information to other units for modulating their behavior.

In particular, the robot controller according to a first embodiment of the invention comprises a multitude of simultaneously working robot controller units. Each unit comprises means for receiving an input signal, means for receiving top-down information (T), means for executing an internal process or dynamics (D), means for storing at least one representation (R) and means for sending top-down information (T).

Each unit further comprises means for issuing motor commands (M), wherein each motor command has a priority (P). The robot controller further comprises means for selecting one or several motor commands (M.) issued by one or several units, based on their priority (P.). According to the invention, each unit is enabled to read representations (R.) stored in other units.

More particularly, each identifiable processing unit or loop n may comprise an input space X that is spanned by exteroception (external perception) and proprioception (self perception). It may have an internal process or dynamics Dₙ. It may create some system-wide publicly accessible representations Rₙ used by itself and other units within the system. The indices may be extended in order to denote which units are reading from the representation, e.g. R_{n,m,o,...} . Further, it may process completely independent from all the other units. The unit may use a subspace Sₙ(X) of the complete input space X as well as the representations R₁, ..., Rₙ₋₁. It can be modulated by top-down information T_{m,n} for m > n. It can send top-down information / modulation T_{n,1} for n > 1. It may emit autonomously some behaviors on the behavior space Bₙ by issuing motor commands Mₙ with weight / priority Pₙ and / or by providing top-down modulation T_{n,1}.

The value of the priority Pₙ is not necessarily coupled to level n, see for example underlying stabilizing processes like balance control etc. A unit n can always choose to perform solely based on the input space X without other representation m≠ n.

The behavioral space covered by the system is the direct product of all Bₙ. The behaviors Bₙ may have different semantics Zⱼ depending on the current situation or context Cᵢ, i.e. the behaviors Bₙ represent skills or actions from the systems point of view rather than observer dependent quantities.

The motor commands of different unit may be compatible or incompatible. In the case of concurrently commanded incompatible motor commands the conflict resolution may decide based on the priorities Pₙ.

All entities describing a unit may be time dependent. The index n represents a hierarchy with respect to the incremental creation of the system, but other views are possible. Different views to the system yield different hierarchies defined by the dependency of the representations Rₙ, the priority of the motor commands Pₙ and the time scales of the execution.

In particular, the sensory space Sₙ(X) may be split into several aspects for clearer reference. The aspects that are concerned with the location of the corresponding entity are termed Sₙ^{L}(X), the features are termed Sₙ^{F}(X) and the time scale is termed Sₙ^{T}(X).

Moreover, the behavior space Bₙ may be split into several aspects for clearer reference. The aspects that are concerned with the potential location of the actions are termed Bₙ^{L}, and the qualitative skills are termed Bₙ^{S}.

Units may be multi-functional in the sense that the representation Rₙ may be input for more than one other unit, e.g. Dₘ: Mₘ =0, Rₘ≠ 0, D_{n>m} = f(Rₘ, ...), D_{l>m} = f(Rₘ, ...).

The system may show mainly three kinds of plasticity or learning:
- Learning may take place within a unit n: This may directly influence the representation Rₙ and the behavior space Bₙ. Other units m may be indirectly influenced if they depend on Rₙ.
- Learning may also concern inter-unit relations: This may explicitly be effected by the plasticity of the top-down information T_{n,m} and by the changing way a unit n interprets a representation Rₘ.
- Finally, structural learning may be implemented: a new unit may be created or recruited by a developmental process. The deletion may also be possible but, as a consequence of multi-functionality, not feasible. Rather, a higher unit n may take over or completely suppress the unit m that would have been removed. This mechanism may be beneficial in the case that unit n gets corrupted and non-functional. Then unit m may get functional again and keep the system in action. The performance may be lower, but there is no complete system failure by this cause.

The sensory subspace decomposition Sₙ(X) and behavior space decomposition Bₙ(X): Sₘ(X) for m<n may be a subspaces in some feature dimensions, for other units generating the behaviour Bₙ(X) more dimensions may be accessible, i.e. higher levels may treat richer information Sₙ(X) concerning the same physical entity outside.

All behaviors Bₙ may influence the sensory perception Sₘ(X) of other units m. This is frequently also addressed as implicit dependence of units. From this it follows that Dₘ may depend implicitly on Dₙ, for some n. Explicit dependence may be modelled by the representations Rₙ.

Unit n with Dₙ may depend on Rₘ but may simultaneously provide top-down feedback T_{n,m}.

Regarding the relation between a motor command Mₙ, a behavior Bₙ and a context Cᵢ, the motor commands Mₙ are the immediate local descriptions of the actions of the unit n, the behaviors Bₙ describe more comprehensive skills or actions from the perspective of the artefact. The unit n may emit a behavior not just by sending direct motor commands Mₙ but also by sending top down information T_{n,m} to other units. The behavior Bₙ may be applicable in more than one context Cᵢ. That means one behavior Bₙ may have different semantics Zⱼ depending on the context Cᵢ. The unit n may not need to "know" about the own semantics, but higher levels may do so.

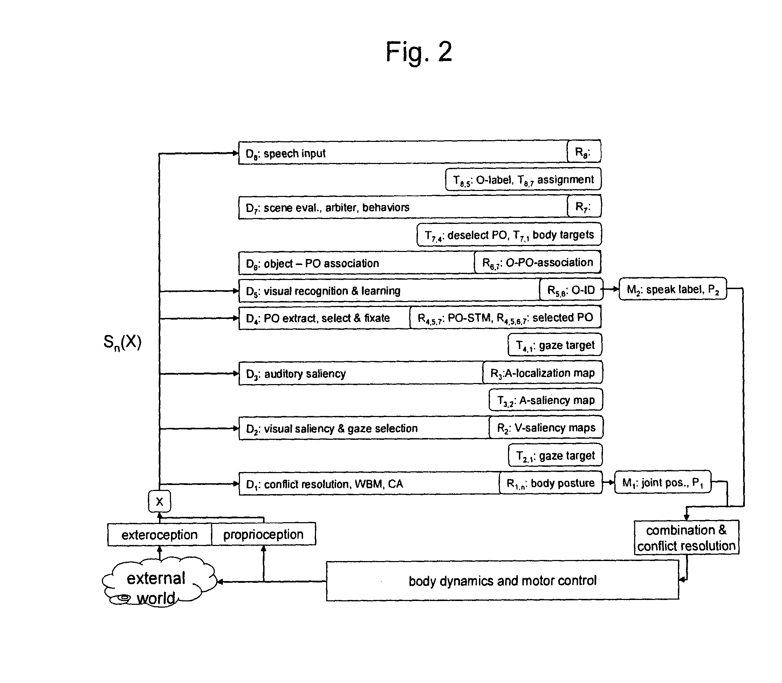

**Figure 2** shows a schematic block diagram of a robot controller according to a second embodiment of the invention. The elements of the overall architecture are arranged in hierarchical units that produce the overall observable behavior.

The first unit with D₁ is the whole body motion control of the robot, including a conflict resolution for different target commands and a self collision avoidance of the robot body.

It receives only proprioceptive information about the current robot posture. It also receives top-down information T_{n,1} in the form of targets for the right and left arm respectively, the head and the body. In a further embodiment of the invention, any other unit may provide such kind of targets.

Without top-down information the robot is standing in a rest position. The behavior subspace B₁ comprises target reaching motions including the whole body while avoiding self collisions.

The semantics Zⱼ that could be attributed to those motions could be "waiting", "pointing", "pushing", "poking" and "walking", etc. This unit provides motor commands to the different joints of the robot.

The second unit with D₂ comprises a visual saliency computation based on contrast, peripersonal space and gaze selection. Based on the incoming image S1(X) visually salient locations in the current field of view are computed and fixated with hysteresis by providing gaze targets or target positions as top-down information T2,1 to unit 1. The sensory space with respect to locations S1L(X) covers the whole possible field of view. The provided representations R2 comprise the saliency maps, their modulations and the corresponding weights. As top-down information T_{n,2} the modulations and the corresponding weights can be set. Depending on this information different kinds of semantics Zⱼ like "search", "explore" and "fixate" could be attributed to behavior space B2 emitted by this unit.

The unit with D₃ computes an auditory localization or saliency map R₃.
It is provided as top-down information T_{3,2} for unit 2, where the auditory component is currently higher weighted than the visual. The behavior space B₃ comprises the fixation of prominent auditory stimuli, which could semantically be interpreted as "fixating a person that is calling the robot".

Unit 4 extracts proto-objects from the current visual scene and performs a temporal stabilization of those in a short term memory (PO-STM). The computation of the proto-objects is purely depth and peripersonal space based, i.e. S₄(X) is a sub-part of a depth map. The sensory space with respect to locations S4L(X) covers only a small portion around the robots body, which is the peripersonal space. The PO-STM and the information which proto-object is currently selected and fixated forms the representation R4. The top-down information T_{4,2} provided to unit 2 are gaze targets with a higher priority than the visual gaze selection, yielding as behaviors B₄ the fixation of proto-objects in the current view. The unit accepts top-down information T_{n,4} for deselecting the currently fixated proto-object or for directly selecting a specific proto-obj ect.

The fifth unit with D₅ performs a visual recognition or interactive learning of the currently fixated proto-object. The sensory input space S₅(X) is the current color image and the corresponding depth map. The unit relies on the representation R₄ for extracting the corresponding sub-part of the information out of S5(X). The representation R₅ provided is the identity O-ID of the currently fixated proto-object. The motor commands M₅ emitted by the unit are speech labels or confirmation phrases. The top-down information T_{n,5} accepted by the unit is a identifier or label for the currently fixated proto-object.

Unit 6 performs an association of the representations R₄ and R₅, i.e. it maintains an association R₆ between the PO-STM and the O-IDs based on the identifier of the currently selected PO. This representation can provide the identity of all classified proto-objects in the current view. Except for the representations it has no other inputs or outputs.

Unit 7 with D₇ evaluates the current scene as represented by R₄ and R₆ and sets the targets for the different internal behaviors generating the targets for the hands and the walking by sending top-down information T_{7,1} to unit U₁. Additional top-down information T_{7,4} can be send to the proto-object fixating unit U₄ for deselecting the currently fixated proto-object and selection another one. The top-down information T_{n,7} accepted by this unit is an assignment identifier configuring the internal behavior generation of this unit. The currently implemented behavior space B₇ comprises single or double handed pointing at proto-objects depending on their object identifier, autonomous adjustment of the interaction distance between the robot and the currently fixated proto-object by walking, walking back to the home position and continuous tracking of two proto-objects with both arms while standing. The applicability of the internal behaviors of this unit is determined based on the current scene elements, the current assignment and a mutual exclusion criterion.

The last unit 8 works on audio streams S₈(X) and processes speech input. The results are currently provided as object labels for the recognizer (T_{8,1}) and as assignments for unit 7 (T_{8,7}).

The implementation described above shows the following interaction patterns. If the robot is standing without any person interacting, it gazes around and fixates visually salient stimuli as governed by unit 2. If a person wants to interact with the system he could produce some salient auditory stimuli by calling or making some noise. Unit 3 would generate auditory saliency maps that are fused with the visual ones, and since the weight of the auditory saliency maps is higher it would dominate the behaviour. Nevertheless, both visually and auditory salient stimuli can support each other. The robot would look at the location of the auditory stimulus or the fused one. This works for all distances from the interacting person to the robot. The units 3 and 2 do not command walking targets. If a person wants to interact more closer with the system he would e.g. hold one or more objects into the peripersonal space.

Unit 4 would extract proto-object representations for the each object and select one for fixation. All current proto objects in the current view would be tracked and maintained in the PO-STM of unit 4. The currently selected proto-object is visually inspected by unit 5, and it is either learned as a new object or it is recognized as a known object. The corresponding labels or phrases are given as output of unit 5.

Unit 8 would provided the auditory input as top-down information to unit 5, e.g. providing a label for new objects. Unit 6 provides an association between the proto-objects in PO-STM and their class as provided by unit 5. Based on this information and a specified task setting unit 7 governs the body motions.

The difference between the two major task settings for interaction are pointing to the currently selected proto-object or the pointing to the currently selected and classified proto-object after association in unit 6. In the first task setting the robot would immediately point at the selected proto-object and would constantly try to adjust the distance between the selected proto-object and its own body. This provides clear feedback to the interacting person concerning the object the robot is currently attending. In the second task setting the body motions including pointing and walking would only be active if the currently selected proto-object is already classified, i.e. there exists an association between the currently selected proto-object and an object identifier O-ID in R6. During this kind of interaction the robot would just gaze at a presented object and start point or walking after a successful classification. This task setting is useful if the robot should only interact to specific known objects.

In both cases the pointing could be with either one hand or two hands depending to with set of objects the currently fixated object depends. The kind of pointing can convey additional information the robot knows about the object additional to its verbally communicated class. An example would be pointing to toys with two hands and pointing to everything else with one hand.

The overall behaviour corresponds to a joint attention based interaction between a robot and a human, communication by speech and gestures and walking of the robot, visually learning and recognizing one or several objects presented to the robot as well as different behaviors based on the presented object conveying internal information the robot has about this object. Those are the basic functions necessary for teaching the robot new objects in interaction for further abilities like search a known object in a room. Any unit n may process without higherlevel units m>n. All the representations and control processes established by lower level units may be employed by higher level units for efficient usage of the computing resouces.

## Claims

1. Robot controller, comprising:
a multitude of simultaneously working robot controller units,
wherein each unit (Uₙ) comprises
means for receiving an input signal
means for receiving top-down information (Tₙ)
means for executing an internal process or dynamics (Dₙ) means for storing at least one representation (Rₙ)
means for sending top-down information (Tₙ)
means for issuing motor commands (Mₙ), wherein each motor command has a priority (Pₙ)
wherein the robot controller further comprises means for selecting one or several motor commands (Mₙ) issued by one or several units, based on their priority (Pₙ), **characterized in that**
each unit is enabled to read representations (Rₘ) stored in other units (Uₘ).

2. Robot controller according to claim 1, wherein
a first unit controls the whole body motion of the robot.

3. Robot controller according to claim 2, wherein controlling the whole body motion includes a conflict resolution for different target commands.

4. Robot controller according to claim 3, wherein controlling the whole body motion further includes a self collision avoidance of the robot body.

5. Robot controller according to claims 2 to 4, wherein controlling the whole body motion is only based on proprioceptive information about the current robot posture, received by the first unit.

6. Robot controller according to claim 5, wherein the first unit also receives top-down information T_{n,l} in the form of targets for the right and left arm respectively, the gaze direction and the walking.

7. Robot controller according to claim 6, wherein
a second unit executes a visual saliency computation based on contrast peripersonal space and gaze selection.

8. Robot controller according to claim 7, wherein
a third unit computes an auditory localization or saliency map (R₃).

9. Robot controller according to claim 8, wherein
a fourth unit extracts proto-objects from the current visual scene and performs a temporal stabilization of those in a short term memory (PO-STM), thereby forming a representation (R₄) representing the proto.

10. Robot controller according to claim 9, wherein
a fifth unit performs a visual recognition or interactive learning of a currently fixated proto-object, based on the representation (R₄) of the fourth unit for extracting the corresponding sub-part of the information.

11. Robot controller according to claim 10, wherein
a sixth unit provide the identity of all classified proto-objects in the current view.

12. Robot controller according to claim 11, wherein
seventh unit sets the targets for the different internal behaviors generating the targets for the hands and the body by sending top-down information (T_{7,1}) to the first unit (U₁).

13. Robot controller according to claim 12, wherein
additional top-down information T_{7,4} is sent to the fourth unit (U₄) for deselecting the currently fixated proto-object and selecting another one.

## Patentansprüche

1. Robotersteuerung mit:
mehreren gleichzeitig arbeitenden Robotersteuerungseinheiten,
wobei jede Einheit (Uₙ) Folgendes aufweist:
eine Einrichtung zum Empfangen eines Eingabesignals,
eine Einrichtung zum Empfangen von Top-Down Informationen (Tₙ),
eine Einrichtung zum Ausführen eines internen Vorgangs oder einer Dynamik (Dₙ),
eine Einrichtung zum Speichern von mindestens einer Darstellung (Rₙ),
eine Einrichtung zum Senden von Top-Down Informationen (Tₙ),
eine Einrichtung zum Ausgeben von Motorbefehlen (Mₙ), wobei jeder Motorbefehl eine Priorität (Pₙ) aufweist,
wobei die Robotersteuerung weiterhin eine Einrichtung zum Auswählen von einem oder mehreren, von einer oder mehreren Einheiten ausgegebenen Motorbefehlen (Mₙ) aufweist, die auf ihrer Priorität (Pₙ) beruhen, **dadurch gekennzeichnet, dass** jede Einheit in der Lage ist, in anderen Einheiten (Um) gespeicherte Darstellungen (Rₘ) zu lesen.

2. Robotersteuerung gemäß Anspruch 1, wobei
eine erste Einheit die gesamte Körperbewegung des Roboters steuert.

3. Robotersteuerung gemäß Anspruch 2, wobei das Steuern der gesamten Körperbewegung eine Konfliktlösung für verschiedene Zielbefehle umfasst.

4. Robotersteuerung gemäß Anspruch 3, wobei das Steuern der gesamten Körperbewegung weiterhin eine Eigenkollisionsvermeidung des Roboterkörpers umfasst.

5. Robotersteuerung gemäß Anspruch 2 bis 4, wobei das Steuern der gesamten Körperbewegung nur auf von der ersten Einheit empfangenen, propriozeptiven Informationen über die derzeitige Roboterstellung beruht.

6. Robotersteuerung gemäß Anspruch 5, wobei die erste Einheit auch Top-Down Informationen T_{n,l} in Form von Zielen für den rechten bzw. linken Arm, die Blickrichtung und das Gehen empfängt.

7. Robotersteuerung gemäß Anspruch 6, wobei
eine zweite Einheit eine visuelle Salienzberechnung auf der Grundlage von Kontrast, peripersonalem Raum und Blickauswahl durchführt.

8. Robotersteuerung gemäß Anspruch 7, wobei
eine dritte Einheit eine auditive Lokalisierung oder Salienzkarte (R₃) berechnet.

9. Robotersteuerung gemäß Anspruch 8, wobei
eine vierte Einheit Proto-Objekte aus der derzeitigen visuellen Szene extrahiert und deren vorübergehende Stabilisierung in einem Kurzzeitspeicher (PO-STM) durchführt, wodurch eine Darstellung (R₄) gebildet wird, die das Proto-Objekt darstellt.

10. Robotersteuerung gemäß Anspruch 9, wobei
eine fünfte Einheit eine visuelle Erkennung oder ein interaktives Erfahren eines momentan fixierten Proto-Objektes auf der Grundlage der Darstellung (R₄) der vierten Einheit zum Extrahieren des entsprechenden Teilbereiches der Information durchführt.

11. Robotersteuerung gemäß Anspruch 10, wobei
eine sechste Einheit die Identität aller klassifizierten Proto-Objekte in der derzeitigen Ansicht bereitstellt.

12. Robotersteuerung gemäß Anspruch 11, wobei
eine siebte Einheit die Ziele für die unterschiedlichen internen Verhaltensweisen festlegt, die die Ziele für die Hände und den Körper erzeugen, indem Top-Down Informationen (T_{7,1}) an die erste Einheit (U₁) gesandt werden.

13. Robotersteuerung gemäß Anspruch 12, wobei
zusätzliche Top-Down Informationen T_{7,4} an die vierte Einheit (U₄) gesandt werden, um das momentan fixierte Proto-Objekt abzuwählen und ein anderes auszuwählen.

## Revendications

1. Organe de commande de robot, comprenant :
une multitude d'unités d'organe de commande de robot marchant simultanément,
dans lequel chaque unité (Uₙ) comprend
des moyens permettant de recevoir un signal d'entrée
des moyens permettant de recevoir des informations descendantes (Tₙ)
des moyens permettant d'exécuter un procédé ou une dynamique interne (Dₙ)
des moyens permettant de stocker au moins une représentation (Rₙ)
des moyens permettant d'envoyer des informations descendantes (Tₙ)
des moyens permettant d'émettre des ordres de moteur (Mₙ), où chaque ordre de moteur a une priorité (Pₙ)
dans lequel l'organe de commande de robot comprend en outre des moyens permettant de sélectionner un ou plusieurs ordres de moteur (Mₙ) émis par une ou plusieurs unités, en se basant sur leur priorité (Pₙ), **caractérisé en ce que**
chaque unité est activée pour lire des représentations (Rₘ) stockées dans d'autres unités (Uₘ).

2. Organe de commande de robot selon la revendication 1, dans lequel
une première unité commande le mouvement de corps entier du robot.

3. Organe de commande de robot selon la revendication 2, dans lequel la commande du mouvement de corps entier inclut une résolution de conflit pour différents ordres cibles.

4. Organe de commande de robot selon la revendication 3, dans lequel la commande du mouvement de corps entier inclut en outre un évitement d'auto-collision du corps de robot.

5. Organe de commande de robot selon les revendications 2 à 4, dans lequel la commande du mouvement de corps entier n'est basée que sur des informations proprioceptives à propos de la posture de robot actuelle, reçues par la première unité.

6. Organe de commande de robot selon la revendication 5, dans lequel la première unité reçoit également des informations descendantes T_{n,1} sous la forme de cibles pour le bras droit et le bras gauche respectivement, la direction de regard et la marche.

7. Organe de commande de robot selon la revendication 6, dans lequel
une deuxième unité exécute un calcul de saillance visuelle en se basant sur un espace péripersonnel de contraste et une sélection de regard.

8. Organe de commande de robot selon la revendication 7, dans lequel
une troisième unité calcule une localisation auditive ou une carte de saillance (R₃).

9. Organe de commande de robot selon la revendication 8, dans lequel
une quatrième unité extrait des proto-objets de la scène visuelle actuelle et réalise une stabilisation temporelle de ceux-ci dans une mémoire à court-terme (PO-STM), formant de ce fait une représentation (R₄) représentant le proto.

10. Organe de commande de robot selon la revendication 9, dans lequel
une cinquième unité réalise une reconnaissance visuelle ou un apprentissage interactif d'un proto-objet fixé actuellement, en se basant sur la représentation (R₄) de la quatrième unité pour extraire la sous-partie correspondante des informations.

11. Organe de commande de robot selon la revendication 10, dans lequel
une sixième unité fournit l'identité de tous les proto-objets classifiés dans la vue actuelle.

12. Organe de commande de robot selon la revendication 11, dans lequel
une septième unité établit les cibles pour les différents comportements internes générant les cibles pour les mains et le corps en envoyant des informations descendantes (T_{7,1}) à la première unité (U₁).

13. Organe de commande de robot selon la revendication 12, dans lequel
des informations descendantes additionnelles T_{7,4} sont envoyées à la quatrième unité (U₄) pour désélectionner le proto-objet actuellement fixé et en sélectionner un autre.
